(19) Europäisches Patentamt
European Patent Office
Office européen des brevets

(11) **EP 2 399 968 A2**

(12) **EUROPEAN PATENT APPLICATION**

(43) Date of publication:
**28.12.2011  Bulletin 2011/52**

(51) Int Cl.:
***C09J 7/02*** (2006.01)      ***C09J 9/02*** (2006.01)

(21) Application number: **11171319.4**

(22) Date of filing: **24.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.06.2010  JP 2010144991**

(71) Applicant: **Nitto Denko Corporation**
**Osaka 567-8680 (JP)**

(72) Inventors:
 • **Nakao, Kota**
  **Ibaraki-shi, Osaka 567-8680 (JP)**

 • **Buzojima, Yasushi**
  **Ibaraki-shi, Osaka 567-8680 (JP)**
 • **Murakami, Ai**
  **Ibaraki-shi, Osaka 567-8680 (JP)**
 • **Nonaka, Takahiro**
  **Ibaraki-shi, Osaka 567-8680 (JP)**

(74) Representative: **Grünecker, Kinkeldey,**
**Stockmair & Schwanhäusser**
**Leopoldstrasse 4**
**80802 München (DE)**

(54) **Electroconductive pressure-sensitive adhesive tape**

(57)    The present invention has an object to provide an electroconductive pressure-sensitive adhesive tape that achieves excellent tackiness and high electrical conductivity even when it is used in a finer shape (in particular, a narrow shape) and that has a small change in resistance value over time and achieves stable electrical conductivity even when it is used for a long time or in a harsh environment.

   The electroconductive pressure-sensitive adhesive tape of the present invention is an adhesive tape including a metal foil and a pressure-sensitive adhesive layer having an electroconductive filler on at least one side of the metal foil. The electroconductive pressure-sensitive adhesive tape has a surface exposure ratio of the electroconductive filler on a surface of the pressure-sensitive adhesive layer of 2 to 5%.

[Fig. 1]

EP 2 399 968 A2

**Description**

[Technical Field]

The present invention relates to electroconductive pressure-sensitive adhesive tapes. More specifically, it relates to electroconductive pressure-sensitive adhesive tapes used for, for example, electrical conduction between two points separated from each other.

[Background Art]

Electroconductive adhesive sheets and electroconductive pressure-sensitive adhesive tapes have electrical conductivity (electroconductive properties) (in particular, electrical conductivity in the thickness direction), and thus are used for electrical connection between two points separated from each other in electronic equipment and the like, electromagnetic wave shield, and the like. Widely known examples of such electroconductive adhesive sheets and electroconductive pressure-sensitive adhesive tapes include an adhesive sheet or tape that includes a metal foil and an adhesive layer or a pressure-sensitive adhesive layer containing conductive particles, on at least one surface of the metal foil (for example, see Patent Documents 1 to 4) and an electroconductive pressure-sensitive adhesive tape that includes a metal foil and a pressure-sensitive adhesive layer on one side of the metal foil, in which the metal foil has a conductive part having a leading end with a terminal on the side covered with the pressure-sensitive adhesive layer and the conductive part penetrates the pressure-sensitive adhesive layer (for example, see Patent Documents 5 to 8).

Each electroconductive adhesive sheet disclosed in Patent Documents 1 to 3 requires a heat and pressure process during adhesion treatment and thus takes time for the adhesion. In contrast, each electroconductive pressure-sensitive adhesive tape disclosed in Patent Documents 4 to 8 has advantages, that is, adhesion can be completed only by attaching the tape to an adherend without heat and pressure process for the adhesion.

Meanwhile, electroconductive pressure-sensitive adhesive tapes used for electronic equipment tend to have smaller size due to downsizing of such electronic equipment, fine-pitch wiring of a print substrate used in such electronic equipment, demand for cost reduction, and the like. Thus, the electroconductive pressure-sensitive adhesive tape is required not to interfere with workability and adhesive properties in the adhesion process even when it is used in a finer shape (in particular, a narrow shape). Moreover, as electronic equipment achieve greater functionality and are used in a wider variety of fields in recent years, it is required for the electroconductive pressure-sensitive adhesive tape to continuously provide stable electrical conductivity even when electronic equipment is used for a longer time or in a harsher environment (for example, in a high temperature and high humidity condition).

Conventional electroconductive pressure-sensitive adhesive tapes, especially in a narrow shape, provide sufficient electrical conductivity immediately after the production of electronic equipment. However, the use for a long time or in a harsh environment leads to a gradual increase in the resistance value and therefore sufficient conduction reliability can not be obtained over a long time. Furthermore, the addition of a large amount of a filler in order to keep the conduction reliability over a long time reduces adhesive power. As described above, under the present circumstances, there is no electroconductive pressure-sensitive adhesive tape that satisfies both high electrical conductivity and adhesive power even when it is used in a narrow shape, and that achieves stable electrical conductivity even when it is used for a long time or in a harsh environment.

[Citation List]

[Patent Literature]

Patent Document 1: Japanese Unexamined Patent Application No. 2006-206843
Patent Document 2: Japanese Unexamined Patent Application No. 2007-214533
Patent Document 3: International Publication WO 2007/125903
Patent Document 4: Japanese Unexamined Patent Application No. 2009-79127
Patent Document 5: Japanese Examined Utility Model Application No. 63-46980
Patent Document 6: Japanese Unexamined Patent Application No. 8-185714
Patent Document 7: Japanese Unexamined Patent Application No. 10-292155
Patent Document 8: Japanese Unexamined Patent Application No. 11-302615

[Summary of Invention]

[Technical Problem]

Therefore, an object of the present invention is to provide an electroconductive pressure-sensitive adhesive tape that satisfies both excellent tackiness and high electrical conductivity even when it is used in a finer shape (in particular, a narrow shape) and that has a small change in resistance value over time and achieves stable electrical conductivity even when it is used for a long time or in a harsh environment.

[Solution to Problem]

After intensive investigations to achieve the object, the present inventors have found that, when a surface exposure ratio of an electroconductive filler is controlled within a particular range on a pressure-sensitive adhesive layer surface in an electroconductive pressure-sensitive adhesive tape having a particular structure, an electroconductive pressure-sensitive adhesive tape that satisfies both excellent tackiness and high electrical conductivity even when it is used in a narrow shape and that achieves stable electrical conductivity even when it is used for a long time or in a harsh environment can be obtained, and the present invention has been accomplished.
That is, the present invention provides an electroconductive pressure-sensitive adhesive tape that includes a metal foil and a pressure-sensitive adhesive layer having an electroconductive filler on at least one side of the metal foil. The electroconductive pressure-sensitive adhesive tape has a surface exposure ratio of the electroconductive filler on a surface of the pressure-sensitive adhesive layer determined by a following method of 2 to 5%.

[Determination Method of Surface Exposure Ratio]

The surface of the pressure-sensitive adhesive layer in the electroconductive pressure-sensitive adhesive tape is vapor stained with a 0.5% aqueous ruthenium acid solution at room temperature for 30 minutes, Then, the surface of the pressure-sensitive adhesive layer is sputtered with Pt-Pd using a sputtering system "E-3200" (manufactured by Hitachi High-Technologies Corporation) to prepare a sample for observation.
A backscattered electron image (observation range: $450 \times 575 \ \mu m^2$) of the surface of the pressure-sensitive adhesive layer in the sample for observation is observed using a scanning electron microscope (FE-SEM) "S-4800" (manufactured by Hitachi High-Technologies Corporation) at an acceleration voltage of 5 kV and a magnification of 200 times.
The obtained backscattered electron image is binarized using an image processing software "Winroof" (manufactured by Mitani Corporation), and an area ratio of an inorganic part attributed to the electroconductive filler is calculated to determine the surface exposure ratio.
The electroconductive pressure-sensitive adhesive tape preferably has a maximum resistance value of 0.1 Ω or less in a first cycle and a rate of increase in resistance value of 100% or less each determined by a following heat cycle test.

[Heat Cycle Test]

The pressure-sensitive adhesive layer of the electroconductive pressure-sensitive adhesive tape is attached to a silver plated material to be an attachment size of 5 mm × 2 mm (area: 10 mm²), and an electrical current is applied to the electroconductive pressure-sensitive adhesive tape containing the attachment part and the silver plated material at a constant current of 2A. The electroconductive pressure-sensitive adhesive tape with the silver plated material is placed in a constant temperature chamber. In the chamber, the temperature is decreased from 26°C to -40°C; then maintained at -40°C for 10 minutes; next increased to 85°C; maintained at 85°C for 10 minutes; and decreased to 25°C. This temperature control is regarded as one cycle and repeated in the chamber. The electroconductive pressure-sensitive adhesive tape with the silver plated material in the chamber is cooled and heated in accordance with the repeated cycles, and the resistance value of the attachment part is continuously determined during the cycles. The rate of increase in resistance value is calculated using a formula below from a maximum resistance value in a 200th cycle and a maximum resistance value in a first cycle.

$$[\text{Rate of increase in resistance value}] = 100 \times ([\text{maximum resistance value in 200th cycle}] \cdot [\text{maximum resistance value in first cycle}])/[\text{maximum resistance value in first cycle}]$$

In the electroconductive pressure-sensitive adhesive tape, the pressure-sensitive adhesive layer preferably has a thickness of 10 to 100 μm.

In the electroconductive pressure-sensitive adhesive tape, it is preferable that the pressure-sensitive adhesive layer is composed of a pressure-sensitive adhesive composition containing the electroconductive filler and that the electroconductive filler has a content of 25 to 250 parts by weight with respect to the total solid content (100 parts by weight) of the pressure-sensitive adhesive composition other than the electroconductive filler.

In the electroconductive pressure-sensitive adhesive tape, the pressure-sensitive adhesive layer is preferably composed of a pressure-sensitive adhesive composition including an acrylic polymer as a base polymer.

The electroconductive pressure-sensitive adhesive tape preferably has a width of 1.0 mm or more and 10 mm or less.

In the electroconductive pressure-sensitive adhesive tape, the surface of the pressure-sensitive adhesive layer preferably has a 180 degree peel adhesion of 0.1 N/2 mm or more with respect to an aluminum plate measured at a tensile speed of 300 mm/min.

[Advantageous Effects of Invention]

The electroconductive pressure-sensitive adhesive tape of the present invention satisfies both excellent tackiness and high electrical conductivity even when it is used in a narrow shape. Furthermore, the electroconductive pressure-sensitive adhesive tape of the present invention has a small change in resistance value over time and achieves stable electrical conductivity even when it is used for a long time or in a harsh environment. On this account, the electroconductive pressure-sensitive adhesive tape of the present invention has good workability when it is used for downsized or fine-pitched products (for example, electronic equipment) and has an advantage in cost. It also can achieve high conduction reliability (conduction reliability over a long time) in products to be used. The electroconductive pressure-sensitive adhesive tape of the present invention can be used in a wide variety of shapes from wide to narrow and thus is highly versatile.

[Brief Description of Drawings]

Fig. 1 is a schematic view (plan view) showing an example of a substrate for evaluation used in a heat cycle test of the electroconductive pressure-sensitive adhesive tape of the present invention.
Fig. 2 is a schematic view showing an equivalent circuit for the electric circuit in the substrate for evaluation used in the heat cycle test of the electroconductive pressure-sensitive adhesive tape of the present invention.
Fig. 3 is a schematic view showing an example of a sample for resistance evaluation used in the heat cycle test of the electroconductive pressure-sensitive adhesive tape of the present invention (a cross-sectional view of the attachment part 13 in Fig. 1).
Fig, 4 is a view showing a profile of the temperature setting (heat cycle condition) of the first and second cycles in the heat cycle test of the electroconductive pressure-sensitive adhesive tape of the present invention.
Fig. 5 is a schematic view (plan view) showing a substrate for evaluation used in the heat cycle test in Examples.

[Description of Embodiments]

The electroconductive pressure-sensitive adhesive tape of the present invention is an adhesive tape that has a pressure-sensitive adhesive layer containing an electroconductive filler on at least one side of a metal foil and that has a surface exposure ratio of the electroconductive filler on a surface of the pressure-sensitive adhesive layer determined by a following method of 2 to 5%. In the electroconductive pressure-sensitive adhesive tape of the present invention, the pressure-sensitive adhesive layer containing the electroconductive filler that has a surface exposure ratio of 2 to 5% on the surface is also referred to as "pressure-sensitive adhesive layer of the present invention".

In the present specification, "electroconductive pressure-sensitive adhesive tape" also includes a sheet-shaped adhesive, "electroconductive pressure-sensitive adhesive sheet". In the present specification, a surface of the pressure sensitive adhesive layer (the pressure-sensitive adhesive layer surface) is also referred to as "adhesive face". As used throughout the present specification, the singular forms "a," "an," and "the" include plural reference unless the context clearly dictates otherwise.

The electroconductive pressure-sensitive adhesive tape of the present invention may be a single-sided pressure-sensitive adhesive tape having an adhesive face on one side of the tape or may be a double-sided pressure-sensitive adhesive tape having adhesive faces on both sides of the tape. In the case of the single-sided pressure-sensitive adhesive tape, examples of the electroconductive pressure-sensitive adhesive tape of the present invention include an adhesive tape having the pressure-sensitive adhesive layer of the present invention on one side of a metal foil. The double-sided pressure-sensitive adhesive tape may have the pressure-sensitive adhesive layers of the present invention on both sides of a metal foil, or may have the pressure-sensitive adhesive layer of the present invention on one side of a metal foil and a pressure-sensitive adhesive layer other than the pressure-sensitive adhesive layer of the present invention (also referred to as "other pressure-sensitive adhesive layer") on the other side of the metal foil. Among them, the electroconductive pressure-sensitive adhesive tape of the present invention is preferably the single-sided pressure-sensitive adhesive tape that has the pressure-sensitive adhesive layer of the present invention on one side of a metal foil from the viewpoint of ensuring conduction reliability over a long time.

[Metal Foil]

The metal foil composing the electroconductive pressure-sensitive adhesive tape of the present invention may be any metal foil that has self-supporting properties and electrical conductivity. Examples of usable metal foils include metal foils made of copper, aluminum, nickel, silver, iron, lead, an alloy of them, and the like. Among them, from the viewpoints of electroconductive properties, cost, and workability, an aluminum foil and a copper foil are preferred, and a copper foil is more preferred. The metal foils may be applied with various surface treatments such as tin plating, silver plating, and gold plating. Namely, in order to prevent the reduction of electrical conductivity and poor appearance due to corrosion, the metal foil is particularly preferably a copper foil coated by tin plating (tin-coated copper foil).

The thickness of the metal foil is not specifically limited, but is, for example, preferably 5 to 500 $\mu$m, more preferably 8 to 200 $\mu$m, and even more preferably 10 to 150 $\mu$m.

[Pressure-Sensitive Adhesive Layer of the Present Invention]

The pressure-sensitive adhesive layer of the present invention is an essential pressure-sensitive adhesive layer in the electroconductive pressure-sensitive adhesive tape of the present invention. Commonly, when a surface of the pressure-sensitive adhesive layer of the present invention of the electroconductive pressure-sensitive adhesive tape of the present invention is attached to an adherend such as a conductor, electrical conduction is ensured between the adherend and the metal foil of the electroconductive pressure-sensitive adhesive tape of the present invention. In this case, the pressure-sensitive adhesive layer of the present invention has a role of current conduction between the adherend and the metal foil.

The pressure-sensitive adhesive layer of the present invention contains an electroconductive filler as an essential component. Examples of the pressure-sensitive adhesive layer of the present invention include, but are not specifically limited to, a pressure-sensitive adhesive layer composed of a pressure-sensitive adhesive composition (electroconductive pressure-sensitive adhesive composition) that contains, for example, an electroconductive filler and a base polymer, and further contains, as necessary, known additives such as a tackifier resin, a crosslinking agent, a crosslinking promoter, an aging inhibitor, a filler, a coloring agent, an ultraviolet absorber, an antioxidant, a chain transfer agent, a plasticizer, a softener, a surfactant, an antistatic agent as long as such additives do not interfere with the characteristics of the present invention.

Examples of the base polymer include, but are not specifically limited to, known base polymers used in adhesives, including rubber polymers such as natural rubbers and various synthetic rubbers [for example, polyisoprene rubber, styrene-butadiene (SB) rubber, styrene-isoprene (SI) rubber, styrene-isoprene-styrene block copolymer (SIS) rubber, styrene-butadiene-styrene block copolymer (SBS) rubber, styrene-ethylene-butylene-styrene block copolymer (SEBS) rubber, styrene-ethylene-propylene-styrene block copolymer (SEPS) rubber, styrene-ethylene-propylene block copolymer (SEP) rubber, regenerated rubber, butyl rubber, polyisobutylene, and a modified rubber of them]; acrylic polymers; silicone polymers; and vinyl ester polymers. These polymers may be used singly or in combination of two or more of them.

Among them, a preferred base polymer is the acrylic polymer from the viewpoint of durability, weatherability, and heat resistance properties. Namely, the pressure-sensitive adhesive layer of the present invention is preferably an acrylic pressure-sensitive adhesive layer containing one or more acrylic polymers as a base polymer, and especially preferably a pressure-sensitive adhesive layer composed of a pressure-sensitive adhesive composition containing the acrylic polymer as a base polymer (acrylic pressure-sensitive adhesive layer). The content of the acrylic polymer in the acrylic pressure-sensitive adhesive layer (100% by weight) is not specifically limited, but is preferably 30 to 75% by weight, and more preferably 50 to 75% by weight.

The acrylic polymer is not specifically limited but is preferably an acrylic polymer composed of an alkyl (meth) acrylate having a linear or branched alkyl group and/or an alkoxyalkyl (meth)acrylates as an essential monomer component. The term "(meth)acrylic" means "acrylic" and/or "methacrylic", and the same is true for other descriptions.

Examples of the alkyl (meth)acrylate having a linear or branched alkyl group (hereinafter, also simply referred to as "alkyl (meth)acrylate") include alkyl (meth)acrylates having an alkyl group with 1 to 20 carbon atoms, such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. These alkyl (meth)acrylates may be used singly or in combination of two or more of them. Among them, the alkyl (meth)acrylate is preferably an alkyl (meth)acrylate having an alkyl group with 4 to 12 carbon atoms, and more preferably 2-ethylhexyl acrylate (2EHA) or n-butyl acrylate (BA).

Examples of the alkoxyalkyl (meth)acrylate [(meth)acrylic acid alkoxyalkyl ester] include, but are not specifically limited to, 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate, and 4-ethoxybutyl (meth) acrylate. These alkoxyalkyl (meth)acrylates may be used singly or in combination of two or more of them. Among them, the alkoxyalkyl (meth)acrylate is preferably 2-methoxyethyl acrylate (2MEA), ethoxyethyl acrylate, or the like.

The content of the alkyl (meth)acrylate and/or the alkoxyalkyl (meth)acrylate is preferably 50 to 100% by weight, more preferably 55 to 100% by weight, and even more preferably 60 to 99.9% by weight, with respect to the total amount (100% by weight) of monomer components composing the acrylic polymer. When both the alkyl (meth)acrylate and the alkoxyalkyl (meth)acrylate are used, the total of the contents (total content) of the alkyl (meth)acrylate and the alkoxyalkyl (meth)acrylate satisfies the range above.

The acrylic polymer preferably includes, in addition to the alkyl (meth)acrylate and/or the alkoxyalkyl (meth) acrylate, a polar group-containing monomer (especially, a carboxyl group-containing monomer) as a copolymerizable monomer component. The acrylic polymer may further include other copolymerizable monomer components such as multifunctional monomers as the components, as necessary.

Examples of the polar group-containing monomer include carboxyl group-containing monomers such as (meth) acrylic acid, itaconic acid, maleic acid, fumaric acid, crotonic acid, and isocrotonic acid (including acid anhydride group-containing monomers such as maleic anhydride and itaconic anhydride); hydroxyl group-containing monomers such as hydroxyalkyl (meth)acrylates including 2-hydroxyethyl (meth)acrylate, 3-hydroxypropyl (meth)acrylate, 4-hydroxybutyl (meth)acrylate, and 6-hydroxyhexyl (meth)acrylate, vinyl alcohol and allyl alcohol; amide group-containing monomers such as (meth)acrylamide, N,N-dimethyl (meth)acrylamide, N-methylol (meth)acrylamide, N-methoxymethyl (meth)acrylamide, N-butoxymethyl (meth)acrylamide, and N-hydroxyethyl acrylamide; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth)acrylate; cyano group-containing monomers such as acrylonitrile and methacrylonitrile; heterocyclic ring-containing vinyl monomers such as N-vinyl-2-pyrrolidone, (meth)acryloyl morpholine as well as N-vinylpiperidone, N-vinylpiperazine, N-vinylpyrrole, and N-vinylimidazole; sulfonic acid group-containing monomers such as sodium vinylsulfonate; phosphoric acid group-containing monomers such as 2-hydroxyethyl acryloyl phosphate; imide group-containing monomers such as cyclohexyl maleimide and isopropyl maleimide; and isocyanate group-containing monomers such as 2-methacryloyloxyethyl isocyanate. These polar group-containing monomers may be used singly or in combination of two or more of them. Among them, the polar group-containing monomer is preferably carboxyl group-containing monomer and more preferably acrylic acid (AA).

The content of the polar group-containing monomer is preferably 0.1 to 30% by weight and more preferably 0.1 to 20% by weight, with respect to the total amount (100% by weight) of monomer components composing the acrylic polymer.

Examples of the multifunctional monomer include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, and urethane acrylate.

The content of the multifunctional monomer is preferably 0.5% by weight or less (for example, 0 to 0.5% by weight) and more preferably 0 to 0.3% by weight, with respect to the total amount (100% by weight) of monomer components composing the acrylic polymer. The multifunctional monomer having a content of 0.5% by weight or less does not lead to excessively high cohesive power of the pressure-sensitive adhesive layer and achieves improved tackiness. When a crosslinking agent is used, the multifunctional monomer may not be used. However, when no crosslinking agent is used, the content of the multifunctional monomer is preferably 0.001 to 0.5% by weight and more preferably 0.002 to 0.1% by weight.

Examples of the copolymerizable monomers other than the polar group-containing monomer and the multifunctional monomer include (meth)acrylates having an alicyclic hydrocarbon group, such as cyclopentyl (meth)acrylate, cyclohexyl (meth)acrylate, and isobornyl (meth)acrylate; aryl (meth)acrylates such as phenyl (meth)acrylate; vinyl esters such as vinyl acetate and vinyl propionate; aromatic vinyl compounds such as styrene and vinyltoluene; olefins and dienes such as ethylene, butadiene, isoprene, and isobutylene; vinyl ethers such as vinyl alkyl ether; and vinyl chloride.

These acrylic polymers can be prepared by polymerization of the monomer components using known or common polymerization methods. Examples of the polymerization method for the acrylic polymer include solution polymerization, emulsion polymerization, bulk polymerization, and polymerization through active energy ray irradiation (active energy ray polymerization). Among them, from the viewpoints of transparency, water resistance properties, cost, and the like, the solution polymerization and the active energy ray polymerization are preferred and the solution polymerization is more preferred.

Various common solvents can be used during the solution polymerization. Examples of such solvents include organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. These solvents may be used singly or in combination of two or more of them.

A polymerization initiator and the like used for the polymerization of the acrylic polymer are not specifically limited, and suitably selected from known or common compounds to be used. More specifically, preferred examples of the polymerization initiator include oil-soluble polymerization initiators including azo polymerization initiators such as 2,2'-azobisisobutyronitrile, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), and dimethyl-2,2-azobis(2-methylpropionate); peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane, These polymerization initiators may be used singly or in combination of two or more of them. The amount of the polymerization initiator used is not specifically limited and may be in a range commonly used as the polymerization initiator.

The weight average molecular weight (Mw) of the acrylic polymer is not specifically limited, but is, for example, preferably 300,000 to 1,200,000, more preferably 350,000 to 1,000,000, and even more preferably 400,000 to 900,000. The acrylic polymer having a weight average molecular weight of 300,000 or more leads to good tackiness. In contrast, the acrylic polymer having a weight average molecular weight of 1,200,000 or less leads to good coating properties. The weight average molecular weight of the acrylic polymer can be controlled by a type and amount of the polymerization initiator to be used, a temperature and time for the polymerization, a concentration of the monomer, an added speed of the monomer for the polymerization, and the like.

The electroconductive filler in the pressure-sensitive adhesive layer of the present invention has a role in providing electrical conductivity for the pressure-sensitive adhesive layer of the present invention. For the electroconductive filler, known or common fillers may be used. Examples of the electroconductive filler include metals such as nickel, iron, chromium, cobalt, aluminum, antimony, molybdenum, copper, silver, platinum, and gold; alloys and oxides of them; fillers made from carbon such as carbon black; and fillers of polymer beads, a resin, and the like coated with these materials. Among them, the metal filler and/or the metal coated filler is preferred for the electroconductive filler. In particular, from the viewpoint of conduction reliability over a long time, the silver filler is preferred. These electroconductive fillers may be used singly or in combination of two or more of them.

The shape of the electroconductive filler is not specifically limited, but preferably a spherical shape and/or a spike shape, and more preferably a spherical shape. The electroconductive filler in a spherical shape and/or a spike shape is readily homogeneously dispersed in the pressure-sensitive adhesive layer. Thus, the electroconductive pressure-sensitive adhesive tape may readily satisfy both the tackiness and the electrical conductivity. An electroconductive filler in a filament shape, a flaky shape, or a resin shape may have poor dispersibility to cause a bulk aggregate or may align in the horizontal direction to the adhesive face in the pressure-sensitive adhesive layer to be difficult to provide the electrical conductivity in the thickness direction. Thus, such an electroconductive pressure-sensitive adhesive tape may not satisfy both the tackiness and the electrical conductivity. Furthermore, such an electroconductive pressure-sensitive adhesive tape may have poor appearance. The aspect ratio of the electroconductive filler is not specifically limited, but is preferably 1.0 to 2.0 and more preferably 1.0 to 1.5. The aspect ratio can be determined, for example, under a scanning electron microscope (SEM).

Commercially available products may be used for the electroconductive filler. Specific examples of the usable commercially available product include electroconductive fillers such as trade name "Ag-HWQ-400" (manufactured by Fukuda Metal Foil & Powder Co., Ltd., silver filler).

The content of the electroconductive filler is preferably 25 to 250 parts by weight, more preferably 30 to 150 parts by weight, and even more preferably 35 to 100 parts by weight, with respect to the total solid content (100 parts by weight) of the pressure-sensitive adhesive composition other than the electroconductive filler. The electroconductive filler having a content of 25 parts by weight or more improves the electrical conductivity. The electroconductive filler having a content of 250 parts by weight or less suppresses the aggregation of the electroconductive filler and does not lead to an excessively rough adhesive face. Thus, this can satisfy both the conduction reliability over a long time and the adhesive power. Such content also has a cost advantage.

The pressure-sensitive adhesive composition (electroconductive pressure-sensitive adhesive composition) composing the pressure-sensitive adhesive layer of the present invention preferably include a crosslinking agent. The crosslinking agent forms cross-linkages in a base polymer (in particular, an acrylic polymer) composing the pressure-sensitive adhesive layer to further increase cohesive power of the pressure-sensitive adhesive layer. The crosslinking agent is not specifically limited and can be suitably selected from known or common agents to be used. Specifically preferred examples include multifunctional melamine compounds (melamine crosslinking agents), multifunctional epoxy compounds (epoxy crosslinking agents), and multifunctional isocyanate compounds (isocyanate crosslinking agents). Among them, the isocyanate crosslinking agents and the epoxy crosslinking agents are preferred and more preferred are the isocyanate crosslinking agents. These crosslinking agents may be used singly or as a mixture of two or more of them.

Examples of the isocyanate crosslinking agent include lower aliphatic polyisocyanates such as 1,2-ethylene diisocyanate, 1,4-butylene diisocyanate, and 1,6-hexamethylene diisocyanate; alicyclic polyisocyanates such as cyclopentylene diisocyanate, cyclohexylene diisocyanate, isophorone diisocyanate, hydrogenated tolylene diisocyanate, and hydrogenated xylene diisocyanate; and aromatic polyisocyanates such as 2,4-tolylene diisocyanate, 2,6-tolylene diisocyanate, 4,4'-diphenylmethane diisocyanate, and xylylene diisocyanate. Other usable examples include a trimethylolpropane/tolylene diisocyanate adduct [manufactured by Nippon Polyurethane Industry Co., Ltd., trade name "CORONATE L"] and a trimethylolpropane/hexamethylene diisocyanate adduct [manufactured by Nippon Polyurethane Industry Co., Ltd., trade name "CORONATE HL"].

Examples of the epoxy crosslinking agent include N,N,N',N'-tetraglycidyl-m-xylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl)isocyanurate, resorcin diglycidyl ether, bisphenol-S-diglycidyl ether, and epoxy resins having two or more epoxy groups in the molecule. Examples of commercially available epoxy crosslinking agents include trade name "TETRAD-C" manufactured by MITSUBISHI GAS CHEMICAL COMPANY, INC.

The content of the crosslinking agent in the pressure-sensitive adhesive composition is not specifically limited. For example, in the case that the pressure-sensitive adhesive layer is the acrylic pressure-sensitive adhesive layer, the content in the pressure-sensitive adhesive composition is preferably 0 to 10 parts by weight and more preferably 0 to 5 parts by weight, with respect to 100 parts by weight of the acrylic polymer.

The pressure-sensitive adhesive composition preferably includes a tackifier resin from the viewpoint of tackiness improvement. Examples of the tackifier resin include terpene tackifier resins, phenol tackifier resins, rosin tackifier resins, and petroleum tackifier resins. Among them, the rosin tackifier resin is preferred. These tackifier resins may be used singly or in combination of two or more of them.

Examples of the terpene tackifier resin include terpene resins such as an $\alpha$-pinene polymer, a $\beta$-pinene polymer, and a dipentene polymer; and modified terpene resins (for example, a terpene-phenol resin, a styrene-modified terpene resin, an aromatic-modified terpene resin, and a hydrogenated terpene resin) that are derived from modification (for example, phenol modification, aromatic modification, hydrogenated modification, and hydrocarbon modification) of these terpene resins.

Examples of the phenol tackifier resin include condensates of various phenols (for example, phenol, m-cresol, 3,5-xylenol, p-alkylphenol, and resorcin) and formaldehyde, such as an alkylphenol resin and a xylene-formaldehyde resin; resols obtained by addition reaction of any of the phenols and formaldehyde using an alkali catalyst; novolacs obtained by condensation reaction of any of the phenols and formaldehyde using an acid catalyst; and rosin-modified phenol resins obtained by addition of phenol to any of rosins (for example, an unmodified rosin, a modified rosin, and various rosin derivatives) using an acid catalyst and then by heat polymerization of the adduct.

Examples of the rosin tackifier resin include unmodified rosins (crude rosins) such as gum rosin, wood rosin, and tall oil rosin; modified rosins (for example, a hydrogenated rosin, a disproportionated rosin, a polymerized rosin, and other chemically modified rosins) obtained by modification such as hydrogenation, disproportionation, and polymerization of any of the unmodified rosins; and various rosin derivatives. Examples of the rosin derivative include rosin esters such as a rosin ester compound obtained by esterification of an unmodified rosin with an alcohol and a modified rosin ester compound obtained by esterification of a modified rosin such as a hydrogenated rosin, a disproportionated rosin, and a polymerized rosin with an alcohol; unsaturated fatty acid-modified rosins obtained by modification of an unmodified rosin or a modified rosin (for example, a hydrogenated rosin, a disproportionated rosin, and a polymerized rosin) with an unsaturated fatty acid; unsaturated fatty acid-modified rosin esters obtained by modification of a rosin ester with an unsaturated fatty acid; rosin alcohols obtained by reduction of a carboxyl group in an unmodified rosin, a modified rosin (for example, a hydrogenated rosin, a disproportioned rosin, and a polymerized rosin), an unsaturated fatty acid-modified rosin, and an unsaturated fatty acid-modified rosin ester; and metal salts of rosins such as an unmodified rosin, a modified rosin, and various rosin derivatives (specifically, a rosin ester).

Examples of the petroleum tackifier resin include known petroleum resins such as an aromatic petroleum resin, an aliphatic petroleum resin, an alicyclic petroleum resin (aliphatic cyclic petroleum resin), an aliphatic/aromatic petroleum resin, an aliphatic/alicyclic petroleum resin, a hydrogenated petroleum resin, a coumarone resin, and a coumarone-indene resin. Specific examples of the aromatic petroleum resin include a polymer using one or more vinyl group-containing aromatic hydrocarbons having 8 to 10 carbon atoms (for example, styrene, o-vinyltoluene, m-vinyltoluene, p-vinyltoluene, $\alpha$-methylstyrene, $\beta$-methylstyrene, indene, and methylindene). For the aromatic petroleum resins, aromatic petroleum resins (so-called "C9 petroleum resins") obtained from a fraction including vinyltoluene, indene, and the like (so-called "C9 petroleum fraction") can be suitably used. Examples of the aliphatic petroleum resin include a polymer using one or more olefins and dienes each having 4 to 5 carbon atoms [for example, olefins such as butene-1, isobutylene, and pentene-1; and dienes such as butadiene, piperylene (1,3-pentadiene), and isoprene]. For the aliphatic petroleum resin, aliphatic petroleum resins (for example, so-called "C4 petroleum resins" and "C5 petroleum resins") obtained from a fraction including butadiene, piperylene, isoprene, and the like (for example, so-called "C4 petroleum fraction" and "C5 petroleum fraction") can be suitably used. Examples of the alicyclic petroleum resin include an alicyclic hydrocarbon resin obtained by cyclization and dimerization of aliphatic petroleum resins (for example, so-called "C4 petroleum resins" and "C5 petroleum resins") and then by polymerization of the cyclized and dimerized products; a polymer of a cyclic diene compound (for example, cyclopentadiene, dicyclopentadiene, ethylidenenorbornene, dipentene, ethylidenebicycloheptene, vinylcycloheptene, tetrahydroindene, vinylcyclohexene, and limonene) and a hydrogenated product of the polymer; and an alicyclic hydrocarbon resin obtained by hydrogenation of an aromatic ring in any of the aromatic hydrocarbon resins above or aliphatic/aromatic petroleum resins below. Examples of the aliphatic/aromatic petroleum resin include a styrene-olefin copolymer. For the aliphatic/aromatic petroleum resin, so-called "C5/C9 copolymerized petroleum resins" and the like can be used.

Commercially available tackifier resins may be used, and examples of the tackifier resin include trade name "HARIESTER" (manufactured by Harima Chemicals, Incorporated), trade name "ESTER GUM" and "PENSEL" (manufactured by Arakawa Chemical Industries, Ltd.), and product name "Rikatack" (manufactured by Rika Fine-Tech Inc.).

The content of the tackifier resin in the pressure-sensitive adhesive composition is not specifically limited. For example, in the case that the pressure-sensitive adhesive layer is the acrylic pressure-sensitive adhesive layer, the content in the pressure-sensitive adhesive composition is preferably 10 to 50 parts by weight and more preferably 15 to 45 parts by weight, with respect to 100 parts by weight of the acrylic polymer.

The pressure-sensitive adhesive composition may further include, as necessary, known additives such as a crosslinking promoter, an aging inhibitor, a filler, a coloring agent (for example, a pigment and a dye), an ultraviolet absorber, an antioxidant, a chain transfer agent, a plasticizer, a softener, a surfactant, and an antistatic agent; and solvents (for example, the solvents usable for the solution polymerization of the acrylic polymer).

The pressure-sensitive adhesive composition can be prepared by mixing, for example, an electroconductive filler, an acrylic polymer (or an acrylic polymer solution), a crosslinking agent, a solvents, and other additives.

The method for forming the pressure-sensitive adhesive layer of the present invention is not specifically limited, and examples of the method include a method of applying the pressure-sensitive adhesive composition to a metal foil or a separator and drying and/or curing the composition as necessary.

The coating for forming the pressure-sensitive adhesive layer can be performed by a known coating method using a common coater such as a gravure roll coater, a reverse roll coater, a kiss roll coater, a dip roll coater, a bar coater, a knife coater, a spray coater, a comma coater, and a direct coater.

The thickness of the pressure-sensitive adhesive layer of the present invention is not specifically limited, but is, for example, preferably 10 to 100 $\mu$m, more preferably 15 to 80 $\mu$m, and even more preferably 20 to 40 $\mu$m, from the viewpoints of tape characteristics, workability, and applications. The pressure-sensitive adhesive layer having a thickness of 10 $\mu$m or more readily disperses stress generated during the attachment to reduce peeling. The pressure-sensitive adhesive layer having a thickness of 100 $\mu$m or less ensures enough conduction reliability over a long time even when the tape is used for a long time or in a harsh environment. Furthermore, such a pressure-sensitive adhesive layer has advantages for a smaller or thinner product.

As described later, in the electroconductive pressure-sensitive adhesive tape of the present invention, the surface exposure ratio of the electroconductive filler is required to be controlled in a particular range. Specifically, an electroconductive pressure-sensitive adhesive tape having a too small surface exposure ratio of an electroconductive filler (less than 2%) does not sufficiently form an electric path and cannot ensure the electroconductive properties and the conduction reliability over a long time. Conversely, an electroconductive pressure-sensitive adhesive tape having a too large surface exposure ratio of an electroconductive filler (more than 5%) reduces the contact area of the pressure-sensitive adhesive layer to an adherend and cannot ensure sufficient tackiness. Such control of the surface exposure ratio can be effectively performed by the control of the relation between the thickness of the pressure-sensitive adhesive layer of the present invention and the content of the electroconductive filler. The control of the balance can satisfy both the sufficient electrical conductivity and the tackiness (adhesive properties) even when the electroconductive pressure-sensitive adhesive tape is used in a narrow shape. Furthermore, such a tape can achieve stable electrical conductivity even when it is used for a long time or in a harsh environment.

Therefore, the thickness of the pressure-sensitive adhesive layer of the present invention is preferably determined based on the balance of the amount (content) of the electroconductive filler added. For example, for the pressure-sensitive adhesive layer having a thickness of 30 $\mu$m, the electroconductive filler having a content of about 35 to 100 parts by weight leads to the sufficient formation of the conductive path in the pressure-sensitive adhesive layer and can ensure the conduction reliability over a long time. Such configuration also provides the sufficient pressure-sensitive adhesive layer on the surface on the side of the pressure-sensitive adhesive layer to ensure the tackiness, and can produce the electroconductive pressure-sensitive adhesive tape that satisfies both the conduction reliability over a long time and the tackiness. For example, for the pressure-sensitive adhesive layer having a thickness of 50 $\mu$m, the electroconductive filler having a content of 35 parts by weight with respect to the total solid content (100% by weight) of the pressure-sensitive adhesive composition other than the electroconductive filler cannot ensure the conduction reliability over a long time. In contrast, the electroconductive filler having a content of 200 parts by weight can ensure the conduction reliability over a long time.

The storage elastic modulus (G') in a range of 0 to 40°C, as determined by dynamic viscoelastic measurement, of the pressure-sensitive adhesive layer of the present invention is not specifically limited, but is, for example, preferably $1 \times 10^4$ Pa or more and less than $1 \times 10^6$ Pa. The pressure-sensitive adhesive layer having a storage elastic modulus of $1 \times 10^4$ Pa or more achieves sufficient cohesive power and can perform rework. The pressure-sensitive adhesive layer having a storage elastic modulus of less than $1 \times 10^6$ Pa can reduce lifting and peeling from an adherend.

The peak temperature of loss tangent (tan δ), as determined by dynamic viscoelastic measurement, of the pressure-sensitive adhesive layer of the present invention is not specifically limited, but is, for example, preferably 0°C or less and more preferably -10°C or less. The pressure-sensitive adhesive layer having a peak temperature of tan δ of more than 0°C hardens the pressure-sensitive adhesive layer at a low temperature and may remarkably reduce the attachment workability or may reduce bump absorptivity. The storage elastic modulus and the peak temperature of tan δ are determined by dynamic viscoelastic measurement. For example, such values can be determined using a plurality of the pressure-sensitive adhesive layers of the present invention that are laminated so as to have a thickness of about 1.5 mm, with "Advanced Rheometric Expansion System (ARES)" manufactured by Rheometric Scientific under the conditions of a frequency of 1 Hz in a shear mode in a range of -70 to 200°C at a temperature increase rate of 5°C/min.

[Other Pressure-Sensitive Adhesive Layers]

In the electroconductive pressure-sensitive adhesive tape of the present invention including other pressure-sensitive adhesive layers, examples of other pressure-sensitive adhesive layers include, but are not specifically limited to, known or common prsssure-sensitive adhesive layers formed from a known adhesive such as a urethane pressure-sensitive adhesive, an acrylic pressure-sensitive adhesive, a rubber pressure-sensitive adhesive, a silicone pressure-sensitive adhesive, a polyester pressure-sensitive adhesive, a polyamide pressure-sensitive adhesive, an epoxy pressure-sensitive adhesive, a vinyl alkyl ether pressure-sensitive adhesive, and a fluorine pressure-sensitive adhesive. These adhesives may be used singly or in combination of two or more of them.

[Electroconductive Pressure-Sensitive Adhesive Tape]

The electroconductive pressure-sensitive adhesive tape of the present invention may include other layers (for example, an inner layer and an under coating layer) in addition to the metal foil, the pressure-sensitive adhesive layer of the present invention, and other pressure-sensitive adhesive layers as long as such other layers do not interfere with the effect of the invention.

The thickness of the electroconductive pressure-sensitive adhesive tape of the present invention is not specifically limited, but is, for example, preferably 25 to 600 $\mu$m, more preferably 30 to 200 $\mu$m, and even more preferably 40 to 140 $\mu$m. The electroconductive pressure-sensitive adhesive tape having a thickness of 600 $\mu$m or less has an advantage for a thinner product. The electroconductive pressure-sensitive adhesive tape having a thickness of 25 $\mu$m or more improves workability. "The thickness of the electroconductive pressure-sensitive adhesive tape of the present invention" does not include the thickness of a separator (release liner).

The width of the electroconductive pressure-sensitive adhesive tape of the present invention is not specifically limited. However, from the viewpoint of effectively providing the effect of the invention, the width is, for example, preferably 1.0 mm or more and 10 mm or less and more preferably 1.5 mm or more and 6 mm or less. The electroconductive pressure-sensitive adhesive tape of the present invention has characteristics that the tape having a small width of 10 mm or less can be used without reducing the workability (in particular, tackiness during an attachment and adhesion process). On this account, the electroconductive pressure-sensitive adhesive tape of the present invention can be preferably used for further downsized or fine-pitched electronic equipment and the like. Furthermore, the electroconductive pressure-sensitive adhesive tape of the present invention even having a small width can achieve high tackiness and excellent electrical conductivity and therefore has a cost advantage.

In the electroconductive pressure-sensitive adhesive tape of the present invention, the surface exposure ratio (surface exposure area ratio) of the electroconductive filler on the surface of the pressure-sensitive adhesive layer of the present invention is 2 to 5%, preferably 3 to 5%, and more preferably 4 to 5%. In particular, even when the electroconductive pressure-sensitive adhesive tape has a small width of 1.0 mm or more and 10 mm or less, the tape having a surface exposure ratio of the electroconductive filler of 2% or more achieves excellent electrical conductivity when the pressure-sensitive adhesive layer side of the present invention is attached to an adherend, and can suppress the increase in resistance value over time to ensure stable electrical conductivity even when it is used for a long time or in a harsh environment. In particular, even when the electroconductive pressure-sensitive adhesive tape has a small width of 1.0 mm or more and 10 mm or less, the tape having a surface exposure ratio of the electroconductive filler of 5% or less can ensure the adhesive power of the surface of the pressure-sensitive adhesive layer of the present invention and can also ensure the conduction reliability over a long time.

In the electroconductive pressure-sensitive adhesive tape of the present invention, the surface exposure ratio of the electroconductive filler on the surface of the pressure-sensitive adhesive layer of the present invention can be determined by [Determination Method of Surface Exposure Ratio].

[Determination Method of Surface Exposure Ratio]

The surface of the pressure-sensitive adhesive layer of the electroconductive pressure-sensitive adhesive tape (the surface of the pressure-sensitive adhesive layer of the present invention) is vapor stained with a 0.5% aqueous ruthenium acid solution at room temperature for 30 minutes. Then, the surface of the pressure-sensitive adhesive layer is sputtered with Pt-Pd using a sputtering system "E-3200" (manufactured by Hitachi High-Technologies Corporation) to prepare a sample for observation.

A backscattered electron image (observation range: $450 \times 575 \ \mu m^2$ ($450 \ \mu m \times 575 \ \mu m$)) of the surface of the pressure-sensitive adhesive layer of the present invention (the surface on the side of the pressure-sensitive adhesive layer of the present invention) in the sample for observation is observed using a scanning electron microscope (FE-SEM) "S-4800" (manufactured by Hitachi High-Technologies Corporation) at an acceleration voltage of 5 kV and a magnification of 200 times.

The obtained backscattered electron image is binarized using an image processing software "Winroof" (manufactured by Mitani Corporation), and an area ratio of an inorganic part attributed to the electroconductive filler is calculated to determine the surface exposure ratio.

For the binarization treatment, for example, the electroconductive filler region may be white (0) or may be black (1) as long as the electroconductive filler can be distinguished from the background (pressure-sensitive adhesive layer) other than the electroconductive filler by different colors.

The surface exposure ratio can be controlled by, for example, the amount of the electroconductive filler added and the thickness of the pressure-sensitive adhesive layer. For example, when the adhesive thickness (pressure-sensitive adhesive layer thickness) is 30 $\mu$m, the electroconductive filler having a content of 35 parts by weight to 100 parts by weight can ensure the adhesive power and the conduction reliability over a long time considering workability. When the adhesive thickness is 50 $\mu$m, the electroconductive filler having a content of 150 parts by weight to 200 parts by weight can ensure the adhesive power and the conduction reliability over a long time considering workability. The adhesive thickness and the content of the electroconductive filler added can control the surface exposure ratio and therefore the tape ensuring the adhesive power and the conduction reliability over a long time can be designed.

In the electroconductive pressure-sensitive adhesive tape of the present invention, the surface exposure ratio of the electroconductive filler on the surface of the pressure-sensitive adhesive layer of the present invention quantitatively represents the ratio of the exposure area of the electroconductive filler (the exposure area of the inorganic part attributed to the electroconductive filler) with respect to the surface area on the side of the pressure-sensitive adhesive layer of the present invention. In the present invention, it is found that the surface exposure ratio is a control index for the electrical conductivity and the tackiness of the electroconductive pressure-sensitive adhesive tape as well as for the stable electrical conductivity when the tape is used for a long time or in a harsh environment. The range of the surface exposure ratio that should be controlled to achieve high electrical conductivity and excellent tackiness as well as to achieve stable electrical conductivity is further found, in particular, even in the electroconductive pressure-sensitive adhesive tape having a small width.

In contrast, a conventional electroconductive pressure-sensitive adhesive tape that includes a metal foil and, on at least one surface of the metal foil, an adhesive layer or a pressure-sensitive adhesive layer containing conductive particles does not ensure the conduction reliability over a long time due to a poor tape strength and a small amount of the electroconductive filler added, in particular, when it is used in a narrow shape. The present invention focuses the surface exposure ratio of the electroconductive filler (conductive path) as the fundamentals for ensuring the conduction reliability, and the quantitative determination of the surface exposure ratio can achieve the design of the electroconductive pressure-sensitive adhesive tape that ensures excellent adhesive power and high electrical conductivity, particularly conduction reliability over a long time even when the tape has a small width. The electroconductive pressure-sensitive adhesive tape of the present invention can achieve excellent conduction reliability over a long time even when it is used in a wide variety of shapes from a wide width to a narrow width, and thus is highly versatile.

In the electroconductive pressure-sensitive adhesive tape of the present invention, the surface of the pressure-sensitive adhesive layer of the present invention has a 180 degree peel adhesion of preferably 0.1 N/2 mm or more (for example, 0.1 to 1 N/2 mm), more preferably 0.2 to 0.9 N/2 mm, and even more preferably 0.2 to 0.8 N/2 mm, with respect to an aluminum plate measured at a tensile speed of 300 mm/min. The pressure-sensitive adhesive layer surface having a 180 degree peel adhesion of 0.1 N/2 mm or more can achieve temporary adhesion. The pressure-sensitive adhesive layer surface having a 180 degree peel adhesion of 1 N/2 mm or less readily ensures the conduction reliability over a long time. The 180 degree peel adhesion can be determined in accordance with Japanese Industrial Standard Z0237 (2000) by 180 degree peeling test (tensile speed: 300 mm/min, adhesive condition to an adherend: a 2-kg roller in one reciprocal movement) in an atmosphere at 23°C and 50% RH with a tensile tester using an aluminum plate as the adherend.

The 180 degree peel adhesion can be controlled by, for example, the surface exposure ratio (the amount of electroconductive filler added and the thickness of the pressure-sensitive adhesive layer).

Though not critical, in the electroconductive pressure-sensitive adhesive tape of the present invention, the maximum resistance value in the first cycle that is determined by the heat cycle test described later is preferably 0.1 $\Omega$ or less (for example, 0.0001 to 0.1 $\Omega$) and more preferably 0.003 to 0.1 $\Omega$. The electroconductive pressure-sensitive adhesive tape having a maximum resistance value in the first cycle of 0.1 $\Omega$ or less can achieve sufficient electrical conductivity. In the present specification, the maximum resistance value in the first cycle is also referred to as "initial resistance value".

Though not critical, in the electroconductive pressure-sensitive adhesive tape of the present invention, the rate of increase in resistance value that is calculated from the maximum resistance value in the 200th cycle and the initial resistance value each determined by the heat cycle test described later is preferably 100% or less and more preferably 80% or less. The rate of increase in resistance value is calculated using the following formula.

$$[\text{Rate of increase in resistance value (\%)}] = 100 \times ([\text{maximum resistance value in 200th cycle } (\Omega)] - [\text{initial resistance value } (\Omega)]) / [\text{initial resistance value } (\Omega)]$$

The rate of increase in resistance value is the index for the stable electrical conductivity when the electroconductive pressure-sensitive adhesive tape is used for a long time or used in a harsh environment. It is considered that the electroconductive pressure-sensitive adhesive tape having a rate of increase in resistance value of 100% or less can be continuously energized in stable conditions and that a product employing the electroconductive pressure-sensitive adhesive tape achieves high reliability. It is considered that the electroconductive pressure-sensitive adhesive tape having a rate of increase in resistance value of more than 100% may rapidly increase the resistance value to cause conduction failure when it is used for a long term or in a harsh environment and such tape reduces the reliability of a product.

The initial resistance value and the rate of increase in resistance value can be controlled by, for example, the surface exposure ratio (the amount of the electroconductive filler added and the thickness of the pressure-sensitive adhesive layer).

The heat cycle test is performed as follows: a silver plated conductor pattern is attached with the electroconductive pressure-sensitive adhesive tape to form a substrate for evaluation having an electric circuit; while applying a constant current to the electric circuit, the substrate for evaluation is exposed to a temperature environment in which low temperature and high temperature are periodically repeated; and the resistance between the metal foil of the electroconductive pressure-sensitive adhesive tape and the silver plated conductor pattern (namely, the contact resistance of the part where the electroconductive pressure-sensitive adhesive tape and the silver plated conductor pattern are attached (attachment part)) is continuously measured.

The maximum resistance value in the first cycle (initial resistance value) and the maximum resistance value in the 200th cycle can be determined as follows. The surface of the pressure-sensitive adhesive layer of the present invention of the electroconductive pressure-sensitive adhesive tape is attached to a silver plated material (silver plated conductor pattern) so as to be an attachment size of 5 mm $\times$ 2 mm (area: 10 mm$^2$), and an electrical current is applied to the electroconductive pressure-sensitive adhesive tape containing the attachment part and the silver plated material (silver plated conductor pattern) at a constant current of 2 A. The electroconductive pressure-sensitive adhesive tape with the silver plated material is placed in a constant temperature chamber. In the chamber, the temperature is decreased from 25°C to -40°C; then maintained at -40°C for 10 minutes; next increased to 85°C; maintained at 85°C for 10 minutes; and decreased to 25°C. Such heat cycle condition is regarded as one cycle and repeated in the chamber. The electroconductive pressure-sensitive adhesive tape with the silver plated material in the chamber is cooled and heated in accordance with the repeated cycles, and the resistance value of the attachment part (contact resistance value) is continuously determined during the cycles. More specifically, the resistance value can be determined in accordance with following [Heat Cycle Test].

[Heat Cycle Test]

(Preparation of Substrate for Evaluation)

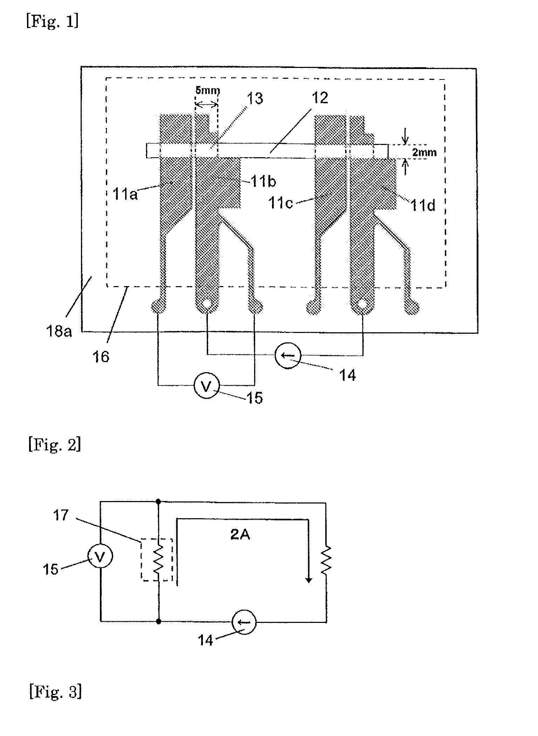

Using a glass epoxy substrate formed with a silver plated conductor pattern, the silver plated conductor pattern is attached to the electroconductive pressure-sensitive adhesive tape. Then, to the silver plated conductor pattern, a constant current power supply and an electrometer are connected to form an electric circuit and a substrate for evaluation is completed. Fig. 1 shows an example of specific configurations of the substrate for evaluation. On the glass epoxy substrate 18a, the silver plated conductor patterns (hereinafter, also referred to as simply "conductor pattern") 11a to 11d are formed. To the conductor patterns 11a to 11d, an electroconductive pressure-sensitive adhesive tape 12 (width: 2 mm) is attached (by pressure) by one reciprocal movement of a 5-kg roller. At the time, the attachment is performed so that the size of an attachment part 13 of the conductor pattern 11b with the electroconductive pressure-sensitive adhesive tape will be 5 mm $\times$ 2 mm (area: 10 mm$^2$). The attachment part 13 ensures the electrical conduction between the conductor pattern 11b and the metal foil of the electroconductive pressure-sensitive adhesive tape 12 (electrical conduction in the thickness direction).

Then, the conductor patterns 11b and 11d are connected to a constant current power supply 14, the conductor patterns 11a and 11b are connected to an electrometer 15, and consequently an electric circuit is formed to prepare a substrate for evaluation. Though not critical, for example, the conductor patterns and the constant current power supply, and the electrometer can be connected by common connection means such as lead wire and soldering. Fig. 2 shows an equivalent circuit for the electric circuit in the substrate for evaluation shown in Fig. 1. In Fig. 2, 17 represents the resistance (contact resistance) of the attachment part 13 in Fig. 1.

(Preparation of Sample for Resistance Evaluation)

In the electric circuit in the substrate for evaluation, at least the part where the conductor pattern and the electroconductive pressure-sensitive adhesive tape are attached (attachment part) is sealed with an ethylene-vinyl acetate copolymer (EVA) between the glass epoxy substrate and a glass plate to prepare a sample for resistance evaluation. Fig. 3 shows a schematic view of the sample for resistance evaluation (a cross-sectional view of the attachment part 13 in Fig. 1). The sample for resistance evaluation has a configuration in which at least the part 13 where the conductor pattern 11b and the electroconductive pressure-sensitive adhesive tape 12 are attached (attachment part) is sealed with EVA (cured object of EVA) 19 between the glass epoxy substrate 18a and a glass plate 18b. Fig. 1 shows an example of the region 16 sealed with EVA (cured object of EVA) (sealed region). Though not critical, for example, the seal with EVA can be performed as follows. On the sealed region 16 in the substrate for evaluation shown in Fig. 1, a thermosetting ethylene-vinyl acetate copolymer film (EVA film) (for example, a thermosetting EVA film having a vinyl acetate content of 28%) is placed, and a glass plate is laminated on the film to prepare a laminate having a configuration of "substrate for evaluation /EVA film/glass plate". The laminate is vacuumed using a vacuum pressing machine at 150°C without pressing for 40 seconds, and next, pressed at 150°C at a pressure of 0.1 MPa for 400 seconds while vacuuming (vacuuming is stopped after 400 seconds from the start of the vacuuming). Then, the laminate is taken out from the vacuum pressing machine, and heated in an oven at 150°C for 40 minutes to thermally cure the EVA.

In this manner, at least the part where the conductor pattern and the electroconductive pressure-sensitive adhesive tape are attached (attachment part) is sealed with EVA to fix the attachment part, and consequently, stable test results can be obtained with a reduced error.

(Atmosphere Temperature Setting in Chamber (Constant Temperature Chamber))

The temperature setting (heat cycle condition) in the chamber is as follows. Though not critical, the humidity (relative humidity) in the chamber is not required to be controlled during the atmosphere temperature in the chamber is changed in accordance with the setting below.

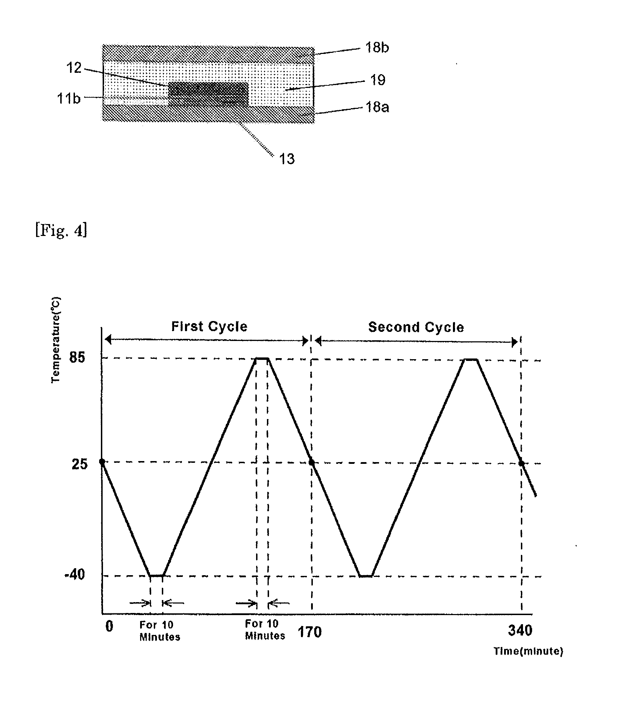

The temperature is 25°C at the start, decreased from 25°C to -40°C at a rate of 100°C/hour, and maintained at -40°C for 10 minutes. Next, the temperature is increased from -40°C to 85°C at a rate of 100°C/hour, and maintained at 85°C for 10 minutes. Then, the temperature is decreased to 25°C at a rate of 100°C/hour. Such heat cycle condition is regarded as one cycle, and repeated at least 200 times. One cycle needs 170 minutes. Fig. 4 shows a profile of the temperature setting (heat cycle condition) of the first and second cycles in the chamber. This temperature setting (heat cycle condition) is in accordance with IEC Standard, IEC 61215 (the second edition) and IEC 61646 (the second edition).

For the chamber (constant temperature chamber), a known or common chamber can be used. Examples of the chamber include, but are not specifically limited to, commercially available products such as trade name "PL-3KP" (manufactured by Espec Corp.) and trade name "PWL-3KP" (manufactured by Espec Corp.).

(Measurement of Resistance Value)

To the electric circuit in the sample for resistance evaluation, a constant current of 2 A is applied by a constant current power supply (the constant current power supply 14 in Fig. 1) (namely, a constant current of 2 A is applied to the attachment part 13 in Fig. 1), and the sample for resistance evaluation is placed in a chamber at an atmosphere temperature of 25°C. Next, the sample for resistance evaluation is repeatedly cooled and heated in accordance with the temperature setting above (heat cycle condition). During the cycles, the electrical voltage is continuously measured (for example, sampling cycle: 5 to 10 times/10 minutes) with the electrometer 15 to continuously collect the resistance value of the attachment part 13. Thus, the maximum resistance value in the first cycle (initial resistance value) and the maximum resistance value in the 200th cycle are determined to calculate the rate of increase in resistance value.

In the electroconductive pressure-sensitive adhesive tape of the present invention, the adhesive face may be protected with a separator (release liner). For the separator, a common release paper and the like may be used. Examples of the separator include, but are not specifically limited to, a separator base having a release coating layer, a low adhesive base composed of a fluorine polymer, and a low adhesive base composed of a non-polar polymer. Examples of the separator base having a release coating layer include plastic film and paper that are surface treated with a release coating agent such as a silicone agent, a long-chain alkyl agent, a fluorine agent, and molybdenum sulfide. Examples of the fluorine polymer include polytetrafluoroethylene, polychlorotrifluoroethylene, polyvinyl fluoride, polyvinylidene fluoride, tetrafluoroethylene-hexafluoropropylene copolymer, and chlorofluoroethylene-vinylidene fluoride copolymer. Examples of the non-polar polymer include an olefinic resin (for example, polyethylene and polypropylene). The separator can be formed by a known or common method. The thickness and the like of the separator are not specifically limited.

The electroconductive pressure-sensitive adhesive tape of the present invention is suitably used for the electrical conduction between two positions separated from each other, the electromagnetic wave shields for electric and electronic equipment and cables, and the like. In particular, it can be used for applications that require to achieve stable electrical conductivity without the increase in resistance value when it is used in various environments or for a long time. Specifically, for example, it can be used for grounding of a printed circuit board, grounding of an outer shielding case for electronic equipment, grounding for static protection, internal wiring of a power supply device and electronic equipment (for example, a liquid crystal display, an organic electroluminescence (EL) display, a plasma display panel (PDP), a display apparatus for electronic paper and the like, and a solar cell).

[Examples]

Hereinafter, the present invention will be described in further detail based on examples, but the present invention is not intended to be limited to the examples.

Preparation Example of Acrylic Polymer A

A monomer mixture of 70 parts by weight of 2-ethylhexyl acrylate (2EHA), 30 parts by weight of n-butyl acrylate (BA), and 3 parts by weight of acrylic acid (AA) was prepared. With respect to 100 parts by weight of the monomer mixture, 0.2 part by weight of 2,2'-azobisisobutyronitrile (AIBN) as a polymerization initiator and 186 parts by weight of ethyl acetate as a polymerization solvent were poured into a separable flask, and the whole was stirred for 1 hour while introducing nitrogen gas. After oxygen in the polymerization system was removed in this manner, the temperature was increased to 63°C, and the reaction was carried out for 10 hours. Then, toluene was added to adjust the concentration to prepare an acrylic polymer solution having a solid concentration of 30% by weight (also referred to as "acrylic polymer solution A"). In the acrylic polymer solution A, the acrylic polymer (also referred to as "acrylic polymer A") had a weight average molecular weight of about 520,000.

Example 1

To the acrylic polymer solution A, 2 parts by weight of "CORONATE L" (manufactured by Nippon Polyurethane Industry Co., Ltd., an isocyanate crosslinking agent) as a crosslinking agent and 30 parts by weight of polymerized rosin pentaerythritol ester (manufactured by Arakawa Chemical Industries, Ltd., "PENSEL D-125") as a tackifier resin were added based on 100 parts by weight of acrylic polymer A to prepare an acrylic pressure-sensitive adhesive composition solution (solid concentration: 46.8% by weight). As an electroconductive filler, 35 parts by weight of "Ag-HWQ-400" (manufactured by Fukuda Metal Foil & Powder Co., Ltd., silver filler, filler diameter $d_{50}$: 13.2 $\mu$m, filler diameter $d_{95}$: 43.0 $\mu$m, spherical) was added with respect to 100 parts by weight of the solid content composing the acrylic pressure-sensitive adhesive composition, and the whole was mixed with a stirrer for 10 minutes to prepare a pressure-sensitive adhesive composition (electroconductive pressure-sensitive adhesive composition). Namely, the content of the electroconductive filler was 35 parts by weight with respect to the total solid content (100 parts by weight) of the pressure-sensitive adhesive composition other than the electroconductive filler.

The obtained pressure-sensitive adhesive composition was cast-coated on a separator (release paper) having a thickness of 163 $\mu$m (manufactured by Oji Paper Co., Ltd., "110EPS (P) blue") so as to have a thickness of 30 $\mu$m after drying. Then, the coated separator was dried by heating under ambient pressure at 120°C for 5 minutes to form a pressure-sensitive adhesive layer. Next, on the pressure-sensitive adhesive layer surface, a tin-coated copper foil having a thickness of 35 $\mu$m was laminated. The laminate was aged at 40°C for 1 day, and then cut to a width of 2 mm to prepare an electroconductive pressure-sensitive adhesive tape.

Example 2

An electroconductive pressure-sensitive adhesive tape was obtained in the same manner as in Example 1 except that the mixing amount of the electroconductive filler was changed to 70 parts by weight.

Example 3

An electroconductive pressure-sensitive adhesive tape was obtained in the same manner as in Example 1 except that the mixing amount of the electroconductive filler was changed to 100 parts by weight.

Example 4

An electroconductive pressure-sensitive adhesive tape was obtained in the same manner as in Example 1 except that the mixing amount of the electroconductive filler was changed to 70 parts by weight and that the thickness of the pressure-sensitive adhesive layer (pressure-sensitive adhesive layer after drying) was changed to 20 $\mu$m.

Comparative Example 1

An electroconductive pressure-sensitive adhesive tape was obtained in the same manner as in Example 1 except that the mixing amount of the electroconductive filler was changed to 100 parts by weight and that the thickness of the pressure-sensitive adhesive layer (pressure-sensitive adhesive layer after drying) was changed to 20 $\mu$m.

Comparative Example 2

An electroconductive pressure-sensitive adhesive tape was obtained in the same manner as in Example 1 except that the mixing amount of the electroconductive filler was changed to 24 parts by weight.

[Evaluation]

The electroconductive pressure-sensitive adhesive tapes obtained in Examples and Comparative Examples were evaluated as follows. The evaluation results are shown in Table 1.

(1) Surface Exposure Ratio

The pressure-sensitive adhesive layer surface of each electroconductive pressure-sensitive adhesive tape obtained in Examples and Comparative Examples was vapor stained with a 0.5% aqueous ruthenium acid solution at room temperature for 30 minutes. Then, the pressure-sensitive adhesive layer surface was sputtered with Pt-Pd using a sputtering system "E-3200" (manufactured by Hitachi High-Technologies Corporation) to prepare a sample for observation.

A backscattered electron image (observation range: $450 \times 575 \ \mu m^2$) of the pressure-sensitive adhesive layer surface of the sample for observation was observed using a scanning electron microscope (FE-SEM) "S-4800" (manufactured by Hitachi High-Technologies Corporation) at an acceleration voltage of 5 kV and a magnification of 200 times.

The obtained backscattered electron image was binarized using an image processing software "Winroof" (manufactured by Mitani Corporation), and an area ratio of an inorganic part attributed to the electroconductive filler with respect to the surface area of the pressure-sensitive adhesive layer was calculated to determine the surface exposure ratio.

(2) Initial Resistance Value and Rate of Increase in Resistance Value (Heat Cycle Test)

[Preparation of Substrate for Evaluation]

Each electroconductive pressure-sensitive adhesive tape obtained in Examples and Comparative Examples was cut into a size of width 2 mm $\times$ length 60 mm and the separator was removed to prepare an electroconductive pressure-sensitive adhesive tape piece.

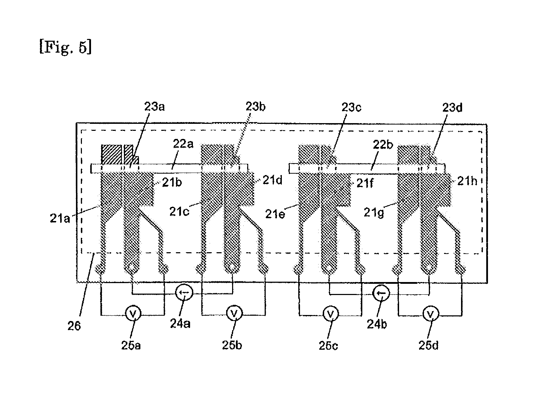

Using a glass epoxy substrate (thickness: 1.6 mm) having the configuration formed with silver plated conductor patterns (Cu 18 $\mu$m/Ni 3 to 7 $\mu$m/Au 0.03 $\mu$m/Ag 5 $\mu$m) 21a to 21h as shown in Fig. 5, each of the electroconductive pressure-sensitive adhesive tape pieces (22a and 22b) was attached (by pressure) by one reciprocal movement of a 5-kg roller so that each size of the attachment parts 23a to 23d of the electroconductive pressure-sensitive adhesive tapes to the conductor patterns would be 5 mm $\times$ 2 mm (area: 10 mm$^2$). Next, to the conductor patterns 21a to 21h, constant current power supplies (24a and 24b) and electrometers (25a to 25d) were connected using lead wires by soldering.

The electric circuit of the substrate for evaluation shown in Fig. 5 corresponds to an electric circuit arranging two electric circuits of the substrate for evaluation in Fig. 1.

[Preparation of Sample for Resistance Evaluation]

Onto a region 26 in the substrate for evaluation shown in Fig. 5, a thermosetting EVA film having a vinyl acetate content of 28% (thickness: 0.6 mm) was laminated, and a glass plate (thickness: 3.2 mm) was further laminated on the film to prepare a laminate having a configuration of "substrate for evaluation /EVA film /glass plate". The laminate was vacuumed using a vacuum pressing machine at 150°C without pressure for 40 seconds, and next, pressed at 150°C at a pressure of 0.1 MPa for 400 seconds while vacuuming (vacuuming was stopped after 400 seconds from the start of the vacuuming). Then, the laminate was taken out from the pressing machine, and heated in an oven at 150°C for 40 minutes for thermal curing of the EVA to prepare a sample for resistance evaluation.

[Atmosphere Temperature Setting in Chamber]

A chamber, trade name "'PL-3K" (manufactured by Espec Corp.), was used and the temperature setting (heat cycle condition) in the chamber was as follows. During the repeat of cooling and heating under the conditions below, the humidity (relative humidity) in the chamber was not specifically controlled and the relative humidity in the chamber was 50% RH at the start.

The temperature was 25°C at the start, decreased from 25°C to -40°C at a rate of 100°C/hour, and maintained at -40°C for 10 minutes. Next, the temperature was increased from -40°C to 85°C at a rate of 100°C/hour, and maintained at 85°C for 10 minutes. Then, the temperature was decreased to 25°C at a rate of 100°C/hour. Such heat cycle condition was regarded as one cycle, and repeated at least 200 times.

[Measurement of Resistance Value]

While applying a constant current of 2 A to the sample for resistance evaluation by the constant current power supplies (24a and 24b) (namely, while applying a constant current of 2 A to the attachment parts 23a to 23d in Fig. 5), the sample was placed in the chamber controlled at an atmosphere temperature of 25°C, and repeatedly cooled and heated in accordance with the heat cycle condition. During the cycles, the electrical voltage was continuously measured (sampling cycle: once/1 minute) with the electrometers (25a to 25d) to continuously collect the resistance value (contact resistance value) of each of the attachment parts 23a to 23d. Thus, the maximum resistance value in the first cycle (initial resistance value) and the maximum resistance value in the 200th cycle were determined to calculate the rate of increase in resistance value. Table 1 shows the mean values (N = 4) of the initial resistance value and the rate of increase in the resistance value each measured at the attachment parts 23a to 23d.

(3) 180 Degree Peel Adhesion

Each electroconductive pressure-sensitive adhesive tape obtained in Examples and Comparative Examples was cut into a size of width 2 mm × length 200 mm and the separator was removed to prepare a test sample.

The test sample was subjected to 180 degree peeling test. The adhesive face of the test sample was attached to a test plate (aluminum plate) by one reciprocal movement of a 2-kg rubber roller (width: about 30 mm) in an atmosphere at 23°C and 50% RH. After 30 minutes, the load at which the test sample was removed was measured using a tensile tester, and the results are shown in "adhesive power" in Table 1.

The measurement was carried out in an atmosphere at 23°C and 50% RH under conditions at a peeling angle of 180° and a tensile speed of 300 mm/min. The number of the tests was three times (N = 3), and the mean value was calculated.

[Table 1]

(Table 1)

| | | Example 1 | Example 2 | Example 3 | Example 4 | Comparative Example 1 | Comparative Example 2 |
|---|---|---|---|---|---|---|---|
| Electroconductive filler | Filler type | Silver | Silver | Silver | Silver | Silver | Silver |
| | Filler name | Ag-HWQ-400 | Ag-HWQ-400 | Ag-HWQ-400 | Ag-HWQ-400 | Ag-HWQ-400 | Ag-HWQ-400 |
| | $d_{50}$ ($\mu$m) | 13.2 | 13.2 | 13.2 | 13.2 | 13.2 | 13.2 |
| | $d_{95}$ ($\mu$m) | 43.0 | 43.0 | 43.0 | 43.0 | 43.0 | 43.0 |
| | Filler shape | Spherical | Spherical | Spherical | Spherical | Spherical | Spherical |
| Content of electroconductive filler (parts by weight/100 parts by weight of total solid content of adhesive composition other than electroconductive filler) | | 35 | 70 | 100 | 70 | 100 | 24 |
| Thickness ($\mu$m) of pressure-sensitive adhesive layer | | 30 | 30 | 30 | 20 | 20 | 30 |
| Base | Type | Tin-coated copper foil | Tin-coated copper foil | Tin-coated copper foil | Tin-coated copper foil | Tin-coated copper foil | Tin-coated copper foil |
| | Thickness ($\mu$m) | 35 | 35 | 35 | 35 | 35 | 35 |
| Width (mm) of electroconductive pressure-sensitive adhesive tape | | 2 | 2 | 2 | 2 | 2 | 2 |
| Surface exposure ratio (%) | | 2 | 3 | 5 | 5 | 6 | 1 |
| Adhesive power (N/2 mm) | | 0.78 | 0.46 | 0.24 | 0.3 | 0.06 | 0.83 |
| Initial resistance value ($\Omega$) | | 0.005 | 0.004 | 0.004 | 0.004 | 0.004 | 0.01 |
| Rate of increase in resistance value (%) | | 55 | 48 | 8 | 33 | 7 | 430 |

As apparent from the results in Table 1, the electroconductive pressure-sensitive adhesive tapes of the present invention (Examples) had high adhesive power as well as small initial resistance value and excellent electrical conductivity even when the tapes had a small width. Furthermore, each tape had a small rate of increase in resistance value measured in the heat cycle test, and therefore the tape can achieve stable electrical conductivity when it is used for a long time or in a harsh environment, and has excellent conduction reliability over a long time. In contrast, the tape having a too high surface exposure ratio of an electroconductive filler (Comparative Example 1) had insufficient adhesive power. Furthermore, the tape having a too low surface exposure ratio of an electroconductive filler (Comparative Example 2) had a high rate of increase in the resistance value from the initial resistance value and had poor electrical conductivity and conduction reliability over a long time.

[Reference Signs List]

11a to 11d Silver plated conductor pattern (conductor pattern)

12 Electroconductive pressure-sensitive adhesive tape

13 Attachment part

14 Constant current power supply

15 Electrometer

16 Region sealed with ethylene-vinyl acetate copolymer (EVA) (sealed region)

17 Resistance of attachment part (contact resistance)

18a Glass epoxy substrate

18b Glass plate

19 Cured object of ethylene-vinyl acetate copolymer (EVA)

21a to 21h Silver plated conductor pattern (conductor pattern)

22a, 22b Electroconductive pressure-sensitive adhesive tape (electroconductive pressure-sensitive adhesive tape piece)

23a to 23d Attachment part (part where electroconductive pressure-sensitive adhesive tape is attached to conductor pattern)

24a, 24b Constant current power supply

25a to 25d Electrometer

26 Region sealed with ethylene-vinyl acetate copolymer (EVA) (sealed region)

**Claims**

1. An electroconductive pressure-sensitive adhesive tape comprising a metal foil and a pressure-sensitive adhesive layer including an electroconductive filler on at least one side of the metal foil, the electroconductive pressure-sensitive adhesive tape having a surface exposure ratio of the electroconductive filler on a surface of the pressure-sensitive adhesive layer determined by a following method of 2 to 5%.
[Determination Method of Surface Exposure Ratio]
The surface of the pressure-sensitive adhesive layer in the electroconductive pressure-sensitive adhesive tape is vapor stained with a 0.5% aqueous ruthenium acid solution at room temperature for 30 minutes. Then, the surface of the pressure-sensitive adhesive layer is sputtered with Pt-Pd using a sputtering system "E-3200" (manufactured by Hitachi High-Technologies Corporation) to prepare a sample for observation.

A backscattered electron image (observation range: $450 \times 575\ \mu m^2$) of the surface of the pressure-sensitive adhesive layer in the sample for observation is observed using a scanning electron microscope (FE-SEM) "S-4800" (manufactured by Hitachi High-Technologies Corporation) at an acceleration voltage of 5 kV and a magnification of 200 times.

The obtained backscattered electron image is binarized using an image processing software "Winroof" (manufactured by Mitani Corporation), and an area ratio of an inorganic part attributed to the electroconductive filler is calculated to determine the surface exposure ratio.

2. The electroconductive pressure-sensitive adhesive tape according to claim 1, wherein the tape has a maximum resistance value of 0.1 Ω or less in a first cycle and a rate of increase in resistance value of 100% or less each determined by a following heat cycle test.

   [Heat Cycle Test]

   The pressure-sensitive adhesive layer of the electroconductive pressure-sensitive adhesive tape is attached to a silver plated material to be an attachment size of 5 mm $\times$ 2 mm (area: 10 mm$^2$), and an electrical current is applied to the electroconductive pressure-sensitive adhesive tape containing the attachment part and the silver plated material at a constant current of 2A. The electroconductive pressure-sensitive adhesive tape with the silver plated material is placed in a constant temperature chamber. In the chamber, the temperature is decreased from 25°C to -40°C; then maintained at -40°C for 10 minutes; next increased to 85°C; maintained at 85°C for 10 minutes; and decreased to 25°C. This temperature control is regarded as one cycle and repeated in the chamber. The electroconductive pressure-sensitive adhesive tape with the silver plated material in the chamber is cooled and heated in accordance with the repeated cycles, and the resistance value of the attachment part is continuously determined during the cycles. The rate of increase in resistance value is calculated using a formula below from a maximum resistance value in a 200th cycle and a maximum resistance value in a first cycle.

$$[\text{Rate of increase in resistance value}] = 100 \times ([\text{maximum resistance}$$

$$\text{value in 200th cycle}] \cdot [\text{maximum resistance value in first cycle}])/[\text{maximum}$$

$$\text{resistance value in first cycle}]$$

3. The electroconductive pressure-sensitive adhesive tape according to claim 1 or 2, wherein the pressure-sensitive adhesive layer has a thickness of 10 to 100 $\mu$m.

4. The electroconductive pressure-sensitive adhesive tape according to any one of claims 1 to 3, wherein the pressure-sensitive adhesive layer is composed of a pressure-sensitive adhesive composition including the electroconductive filler, and the electroconductive filler has a content of 25 to 250 parts by weight with respect to the total solid content (100 parts by weight) of the pressure-sensitive adhesive composition other than the electroconductive filler.

5. The electroconductive pressure-sensitive adhesive tape according to any one of claims 1 to 4, wherein the pressure-sensitive adhesive layer is composed of a pressure-sensitive adhesive composition including an acrylic polymer as a base polymer.

6. The electroconductive pressure-sensitive adhesive tape according to any one of claims 1 to 5, wherein the tape has a width of 1.0 mm or more and 10 mm or less.

7. The electroconductive pressure-sensitive adhesive tape according to any one of claims 1 to 6, wherein the surface of the pressure-sensitive adhesive layer has a 180 degree peel adhesion of 0.1 N/2mm or more with respect to an aluminum plate measured at a tensile speed of 300 mm/min.

[Fig. 1]

[Fig. 2]

[Fig. 3]

[Fig. 4]

[Fig. 5]

**REFERENCES CITED IN THE DESCRIPTION**

**Patent documents cited in the description**

- JP 2006206843 A
- JP 2007214533 A
- WO 2007125903 A
- JP 2009079127 A
- JP 63046980 A
- JP 8185714 A
- JP 10292155 A
- JP 11302615 A